# EUROPEAN PATENT APPLICATION

(11) **EP 4 832 096 A1**
(43) Date of publication of application: **28.10.2026**
(21) Application number: 26169551.4
(22) Date of filing: 31.03.2026
(51) Int. Cl.: H01M 4/36, H01M 4/04, H01M 4/58, H01M 4/62, H01M 4/136, H01M 10/054, H01M 4/02

(54) **POSITIVE ELECTRODE PARTICLES AND PREPARATION METHOD THEREOF, POSITIVE ELECTRODE PLATE, SODIUM BATTERY, AND ENERGY STORAGE APPARATUS**

(30) Priority: 27.04.2025 CN 202510541074
(71) Applicant: Xiamen Hithium Energy Storage Technology Co., Ltd., Xiamen, Fujian 361100 (CN)
(72) Inventor: WANG, Yugang, Xiamen, Fujian, 361100 (CN); WANG, Wei, Xiamen, Fujian, 361100 (CN); WANG, Shiwen, Xiamen, Fujian, 361100 (CN)
(74) Representative: Manitz Finsterwald Patent- und Rechtsanwaltspartnerschaft mbB

(57) **Abstract**

The present application provides positive electrode particles and a preparation method thereof, a positive electrode plate, a sodium battery, and an energy storage apparatus. The positive electrode particles provided in an embodiment of the present disclosure include sodium iron phosphate pyrophosphate composite particles. Each sodium iron phosphate pyrophosphate composite particle includes a sodium iron phosphate pyrophosphate particle and a carbon coating layer coated on a surface of the sodium iron phosphate pyrophosphate particle. The positive electrode particles include gray particles and golden particles, a quantity proportion Z of the gray particles among the positive electrode particles satisfying 0.8≤Z≤1.

## Description

### FIELD

The present disclosure relates to the field of energy storage technologies, and more particularly, to positive electrode particles and a preparation method thereof, a positive electrode plate, a sodium battery, and an energy storage apparatus.

### BACKGROUND

Sodium iron phosphate pyrophosphate Na₄Fe₃(PO₄)₂P₂O₇ with three-dimensional sodium ion diffusion channels and a sodium superionic conductor structure has the characteristics of high voltage plateau, high capacity, excellent rate capability, and excellent cycling stability, and has great potential to serve as a positive electrode material for large-scale production in sodium batteries. However, Na₄Fe₃(PO₄)₂P₂O₇ has a high powder electrical resistivity and a poor electric conductivity. Thus, when applied to the sodium battery, Na₄Fe₃(PO₄)₂P₂O₇ causes an excessively high internal resistance of the sodium battery and reduces a cycle life of the sodium battery.

### SUMMARY

Embodiments of the present disclosure provide positive electrode particles. The positive electrode particles have a relatively low powder electrical resistivity.

In a first aspect, an embodiment of the present disclosure provides positive electrode particles. The positive electrode particles include sodium iron phosphate pyrophosphate composite particles. Each of the sodium iron phosphate pyrophosphate composite particles includes a sodium iron phosphate pyrophosphate particle and a carbon coating layer coated on a surface of the sodium iron phosphate pyrophosphate particle. The positive electrode particles include gray particles and golden particles, a quantity proportion Z of the gray particles among the positive electrode particles satisfying 0.8≤Z≤1.

Further, the positive electrode particles satisfy a relation of I_{P}/I_{G}≤0.01, where I_{P} represents an intensity of a peak in a Raman pattern of the positive electrode particles in a range from 960 cm⁻¹ to 1030 cm⁻¹, and where I_{G} represents an intensity of a peak in the Raman pattern of the positive electrode particles in a range from 1570 cm⁻¹ to 1620 cm⁻¹.

Further, the positive electrode particles further satisfy a relation of I_{D}/I_{G}≤1.2, where I_{D} represents an intensity of a peak in the Raman pattern of the positive electrode particles in a range from 1330 cm⁻¹ to 1370 cm⁻¹, and where I_{G} represents the intensity of the peak in the Raman pattern of the positive electrode particles in the range from 1570 cm⁻¹ to 1620 cm⁻¹.

Further, the positive electrode particles further include sodium iron phosphate particles and sodium iron pyrophosphate particles, and in the positive electrode particles, a mass fraction of the sodium iron phosphate particles is less than or equal to 5%, and a mass fraction of the sodium iron pyrophosphate particles is less than or equal to 5%.

Further, in the positive electrode particles, a mass fraction A of the carbon coating layer satisfies 1%≤A≤10%.

Further, the positive electrode particles have a powder electrical resistivity R satisfying 10Ω·cm≤R≤9999Ω·cm.

In a second aspect, an embodiment of the present disclosure further provides a method for preparing positive electrode particles. The method includes: mixing a sodium source, a phosphorus source, an iron source, and a carbon source in a solvent to obtain a slurry; spray-drying the slurry to obtain precursor powder; and performing stepwise sintering on the precursor powder, to obtain the positive electrode particles. The positive electrode particles include sodium iron phosphate pyrophosphate composite particles. Each of the sodium iron phosphate pyrophosphate composite particles includes a sodium iron phosphate pyrophosphate particle and a carbon coating layer coated on a surface of the sodium iron phosphate pyrophosphate particle. The positive electrode particles include gray particles and golden particles, a quantity proportion Z of the gray particles among the positive electrode particles satisfying 0.8≤Z≤1.

Further, said performing stepwise sintering on the precursor powder includes: performing a first-stage sintering at a first temperature T1 satisfying 200°C≤T1≤300°C; performing a second-stage sintering at a second temperature T2 satisfying 300°C≤T2≤400°C; and performing a third-stage sintering at a third temperature T3 satisfying 450°C≤T3≤600°C.

In a third aspect, an embodiment of the present disclosure further provides a positive electrode plate. The positive electrode plate includes a positive electrode current collector and a positive electrode active layer. The positive electrode active layer includes the positive electrode particles according to the first aspect of the present disclosure or positive electrode particles obtained by the method for preparing the positive electrode particles according to the second aspect of the present disclosure.

Further, the positive electrode plate has a film resistivity M satisfying 0.1Ω·m≤M≤5Ω·m.

In a fourth aspect, an embodiment of the present disclosure further provides a sodium battery. The sodium battery includes an electrolyte, the positive electrode plate according to the third aspect of the present disclosure, a separator, and a negative electrode plate.

In a fifth aspect, an embodiment of the present disclosure provides an energy storage apparatus. The energy storage apparatus includes a casing, and the sodium battery according to the fourth aspect of the present disclosure. The sodium battery is received in the casing.

The positive electrode particles of the present disclosure include the sodium iron phosphate pyrophosphate composite particles. Each of the sodium iron phosphate pyrophosphate composite particles includes the sodium iron phosphate pyrophosphate particle and the carbon coating layer coated on the surface of the sodium iron phosphate pyrophosphate particle. The positive electrode particles include the gray particles and the golden particles, and the quantity proportion Z of the gray particles among the positive electrode particles satisfying 0.8≤Z≤1. The gray particles among the positive electrode particles of the present disclosure have a relatively high quantity proportion, indicating that the positive electrode particles have a relatively high carbon coating degree, a lower powder electrical resistivity, and a relatively high electric conductivity. The positive electrode particles, when applied to the sodium battery, enable the sodium battery to have a longer cycle life.

### BRIEF DESCRIPTION OF THE DRAWINGS

In order to clearly explain technical solutions according to embodiments of the present disclosure, drawings used in the description of the embodiments are briefly described below. The drawings as described below are merely some embodiments of the present disclosure. Based on these drawings, other drawings can be obtained by those skilled in the art without creative efforts.
FIG. 1 is a schematic structural view of positive electrode particles according to an embodiment of the present disclosure.
FIG. 2 is a schematic flowchart of a method for preparing positive electrode particles according to an embodiment of the present disclosure.
FIG. 3 is a schematic flowchart of preparation of precursor powder according to an embodiment of the present disclosure.
FIG. 4 is a schematic flowchart of stepwise sintering of precursor powder according to an embodiment of the present disclosure.
FIG. 5 is a schematic structural view of a positive electrode plate according to an embodiment of the present disclosure.
FIG. 6 is a schematic structural view of a sodium battery according to an embodiment of the present disclosure.
FIG. 7 is a schematic structural view of a cross section along an A-A direction of a sodium battery in FIG. 6 according to an embodiment of the present disclosure.
FIG. 8 is a schematic structural view of a negative electrode plate according to an embodiment of the present disclosure.
FIG. 9 is a scanning electron microscope image of positive electrode particles prepared in Example 1 of the present disclosure.
FIG. 10 is an optical microscope image of positive electrode particles prepared in Example 1 of the present disclosure, captured with a Raman spectrometer.
FIG. 11 is a Raman spectrum of golden particles in FIG. 10.
FIG. 12 is a Raman spectrum of gray particles in FIG. 10.
FIG. 13 is a schematic structural view of an energy storage apparatus according to an embodiment of the present disclosure.
FIG. 14 is a structural diagram of an energy storage system according to an embodiment of the present disclosure.
FIG. 15 illustrates an application scenario of an energy storage system according to an embodiment of the present disclosure.

Description of reference signs in the accompanying drawings:
100: positive electrode particle (for example, sodium iron phosphate pyrophosphate composite particle); 10: sodium iron phosphate pyrophosphate particle; 20: carbon coating layer; 200: positive electrode plate; 210: positive electrode current collector; 220: positive electrode active layer; 300: sodium battery; 320: separator; 330: negative electrode plate; 331: negative electrode current collector; 332: negative electrode active layer; 340: housing; 350: end cover assembly; 400: energy storage apparatus; 410: casing; 500: energy storage system; 510: electrical energy conversion apparatus.

### DETAILED DESCRIPTION OF THE EMBODIMENTS

To enable those skilled in the art to understand solutions of the present disclosure, technical solutions according to embodiments of the present disclosure will be described clearly and completely below in combination with accompanying drawings of the embodiments of the present disclosure. The embodiments described below are only a part of the embodiments of the present disclosure, rather than all embodiments of the present disclosure. Based on the embodiments of the present disclosure, all other embodiments obtained by those skilled in the art without paying creative efforts shall fall within the protection scope of the present disclosure.

It should be noted that terms "first" and "second" in the specification, claims, and accompanying drawings of the present disclosure are used to distinguish different objects, rather than to describe a specific sequence. Terms "including" and "having" and any variations thereof in the embodiments of the present disclosure are intended to cover non-exclusive inclusions. For example, a process, method, system, product, or device that includes a series of steps or units is not limited to those listed steps or units, but may also include other steps or units that are not listed or are inherent to the process, method, product, or device.

The technical solutions according to the embodiments of the present disclosure are described below in combination with the accompanying drawings.

It should be noted that for convenience of explanation, in the embodiments of the present disclosure, the same reference signs denote the same components. For brevity, detailed description of the same components is omitted in different embodiments.

Currently, generation of green electrical energy generally relies on photovoltaics, wind power, hydropower, etc. However, the wind power, solar energy, etc. have problems such as significant intermittency and high volatility, causing grid instability as well as insufficient power during a peak demand period and excess power during an off-peak demand period. The unstable voltage also causes loss of the electrical power. Thus, an insufficient power demand or limited grid acceptance capacity may trigger wind and solar curtailment. Energy storage is a way to address these problems. That is, the electrical energy is converted into other forms of energy and stored by physical or chemical means, and the stored energy is converted back into the electrical energy when required. The energy storage is similar to a large-scale "power bank", which can store the electrical energy when the photovoltaics and the wind power are abundant and releases the stored electrical power when required.

A battery is the smallest energy storage unit of an energy storage apparatus and an energy storage system. The performances of the battery directly would directly affect the performances and applications of the energy storage apparatus and the energy storage system. Batteries include lithium batteries and sodium batteries.

Sodium iron phosphate pyrophosphate Na₄Fe₃(PO₄)₂P₂O₇, with three-dimensional sodium ion diffusion channels and a sodium superionic conductor structure, has characteristics such as high voltage plateau, high capacity, excellent rate capability and cycling stability, thereby having a great potential to serve as a positive electrode material for large-scale production in the sodium batteries. However, Na₄Fe₃(PO₄)₂P₂O₇ has a high powder electrical resistivity and a poor electric conductivity. When applied to the sodium battery, Na₄Fe₃(PO₄)₂P₂O₇ results in an excessively great internal resistance of the sodium battery, thereby shortening the cycle life of the sodium battery. In the related art, through carbon coating, the powder electrical resistivity of the sodium iron phosphate pyrophosphate is reduced, and electron transfer efficiency of the sodium iron phosphate pyrophosphate is improved. However, the sodium iron phosphate pyrophosphate is synthesized within a narrow temperature range. To well improve a graphitization degree of a carbon coating layer, sintering is usually performed at a relatively high temperature, at which the sodium iron phosphate pyrophosphate may be easily decomposed, thereby reducing gram capacity of the sodium iron phosphate pyrophosphate. In view of this, positive electrode particles and a preparation method thereof are provided in the following embodiments of the present disclosure. The positive electrode particles of the present disclosure have a relatively low powder electrical resistivity and a relatively high gram capacity.

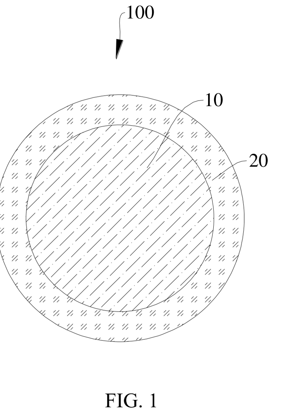

An embodiment of the present disclosure provides positive electrode particles. The positive electrode particles include sodium iron phosphate pyrophosphate composite particles. As illustrated in FIG. 1, a positive electrode particle 100 (for example, a sodium iron phosphate pyrophosphate composite particle 100) includes a sodium iron phosphate pyrophosphate particle 10 and a carbon coating layer 20. The sodium iron phosphate pyrophosphate particle 10 is also referred to as composite sodium iron phosphate, having a chemical formula Na₄Fe₃(PO₄)₂P₂O₇, abbreviated as NFPP. The carbon coating layer 20 is coated on a surface of the sodium iron phosphate pyrophosphate particle 10. The positive electrode particles include gray particles and golden particles, a quantity proportion Z of the gray particles among the positive electrode particles satisfying 0.8≤Z≤1.

The positive electrode particles according to the embodiment of the present disclosure may be applied to the sodium battery (such as a sodium-ion battery), as a positive electrode active material for a positive electrode plate of the sodium battery.

It should be noted that "gray particles" refers to those particles with gray color among the positive electrode particles, and "golden particles" refers to those particles with golden color among the positive electrode particles.

It should be noted that the gray particles and the golden particles may be observed using an optical microscope. The quantity proportion of the gray particles among the positive electrode particles may be obtained by: selecting a region under the optical microscope; selecting a plurality of particles (e.g., 100, 200, 300, 400, etc.) in the region for statistics; statistically calculating the quantity of the golden particles and the quantity of the gray particles, separately; and calculating the quantity proportion Z of the gray particles, where Z is the quantity of the gray particles/(the quantity of the golden particles+ the quantity of the gray particles).

It should be noted that the gray particles and the golden particles may be observed by means of a Raman spectrometer. During sample preparation, a small amount of positive electrode particles may be taken and placed at a center of a slide, and an aluminum foil is placed over the positive electrode particles with a smooth surface of the aluminum foil facing downward. Another coverslip is placed over the aluminum foil, subsequent to pressing gently and uniformly for 5 seconds, the upper coverslip and the aluminum foil are removed to obtain a flat sample surface of the positive electrode particles. During testing, a laser power of the Raman spectrometer is set to b within a range from1 mW to 10 mW, a scanning range of the Raman spectrometer is from 700 cm⁻¹ to 3500 cm⁻¹, and a laser wavelength of the Raman spectrometer is set to be 532 nm.

To be specific, the quantity proportion Z of the gray particles among the positive electrode particles may be, but not limit to, 0.8, 0.81, 0.82, 0.83, 0.84, 0.85, 0.86, 0.87, 0.88, 0.9, 0.91, 0.92, 0.93, 0.94, 0.95, 0.96, 0.97, 0.98, 1.0, etc. When the quantity proportion Z of the gray particles among the positive electrode particles is excessively small, a quantity proportion of the golden particles among the positive electrode particles may be excessively great, indicating an insufficient carbon coating degree of the positive electrode particles, which may lead to an excessively low powder electrical resistivity of the positive electrode particles. When such positive electrode particles are applied to the sodium battery, the internal resistance of the sodium battery may be excessively great, which is not conducive to exertion of capacity of the positive electrode particles and shortens the cycle life of the sodium battery.

It should be understood that, when Z=1, all the positive electrode particles are gray particles, that is, the positive electrode particles include no golden particles in this case.

The positive electrode particle 100 (e.g., sodium iron phosphate pyrophosphate composite particle 100) of the present disclosure includes the sodium iron phosphate pyrophosphate particle 10 and the carbon coating layer 20 coated on the surface of the sodium iron phosphate pyrophosphate particle 10. The positive electrode particles include the gray particles and the golden particles, and the quantity proportion Z of the gray particles among the positive electrode particles satisfying 0.8≤Z≤1. The gray particles among the positive electrode particles of the present disclosure take a relatively high quantity proportion, indicating that the positive electrode particles have a relatively high carbon coating degree, a lower powder electrical resistivity, and a relatively high electric conductivity. The positive electrode particles, when applied to the sodium battery, enable the sodium battery to have a longer cycle life.

In some embodiments, the positive electrode particles satisfy a relation of I_{P}/I_{G}≤0.01, where: I_{P} represents an intensity of a peak in a Raman pattern of the positive electrode particles in a range from 960 cm⁻¹ to 1030 cm⁻¹; and I_{G} represents an intensity of a peak in the Raman pattern of the positive electrode particles in a range from 1570 cm⁻¹ to 1620 cm⁻¹.

It should be understood that a ratio of the intensity I_{P} of the peak in the Raman pattern of the positive electrode particles in the range from 960 cm⁻¹ to 1030 cm⁻¹ to the intensity I_{G} of the peak in the Raman pattern of the positive electrode particles in the range from 1570 cm⁻¹ to 1620 cm⁻¹ is less than or equal to 0.01.

It should be noted that the Raman spectrometer may scan individual particles of the positive electrode particles to obtain the Raman pattern, or may perform an area scanning on the positive electrode particles, that is, scanning a specific region. I_{P}/I_{G} of the present disclosure refers to an average value of I_{P}/I_{G} values derived from the Raman pattern of a plurality of positive electrode particles (e.g., 100, 300, 500, 1000, etc.).

It should be noted that the peak in the range from 960 cm⁻¹ to 1030 cm⁻¹ in the Raman pattern is a peak of P-O bond in PO4³⁻ of a sodium iron phosphate pyrophosphate structure. The weaker intensity of the peak in the range from 960 cm⁻¹ to 1030 cm⁻¹ in the Raman pattern indicates a lower content of PO4³⁻ in the positive electrode particles, that is, the sodium iron phosphate pyrophosphate particle 10 is coated more completely and evenly by the carbon coating layer 20, and the powder electrical resistivity of the positive electrode particles is lower. In contrast, the higher intensity of the peak in the range from 960 cm⁻¹ to 1030 cm⁻¹ in the Raman pattern indicates a higher content of PO4³⁻ in the positive electrode particles, that is, the sodium iron phosphate pyrophosphate particle 10 is coated less completely by the carbon coating layer 20, and the powder electrical resistivity of the positive electrode particles is higher. In the Raman pattern, the peak in the range from 1570 cm⁻¹ to 1620 cm⁻¹ is a peak of G-band in graphitized carbon. Therefore, the higher intensity of the peak in the range from 1570 cm⁻¹ to 1620 cm⁻¹ indicates a higher graphitization degree of the carbon coating layer 20 of each of the positive electrode particles, that is, the positive electrode particles have a higher electron transfer rate.

To be specific, I_{P}/I_{G} may be, but not limited to, 0, 0.0001, 0.0005, 0.0008, 0.001, 0.002, 0.003, 0.004, 0.005, 0.006, 0.007, 0.008, 0.009, 0.01, etc. The lower the I_{P}/I_{G}, the more completely the sodium iron phosphate pyrophosphate particle 10 in the positive electrode particles is coated by the carbon coating layer 20, the higher the graphitization degree of the carbon coating layer 20 of each of the positive electrode particles, and the positive electrode particles have the higher electron transfer rate. When I_{P}/I_{G} is excessively high, the sodium iron phosphate pyrophosphate particle 10 of the sodium iron phosphate pyrophosphate composite particle 100 is coated insufficiently by the carbon coating layer 20, the graphitization degree of the carbon coating layer 20 of each of the positive electrode particles is excessively low, the electron transfer rate of the positive electrode particles is reduced, and the powder electrical resistivity of the positive electrode particles is improved.

In this embodiment, in the Raman pattern of the positive electrode particles, the ratio of the intensity I_{P} of the peak in the Raman pattern of the positive electrode particles in the range from 960 cm⁻¹ to 1030 cm⁻¹ to the intensity I_{G} of the peak in the Raman pattern of the positive electrode particles in the range from 1570 cm⁻¹ to 1620 cm⁻¹ is less than or equal to 0.01. This indicates that, in the positive electrode particles of the embodiments of the present disclosure, the sodium iron phosphate pyrophosphate particle 10 has an extremely small part exposed to the outside, and the sodium iron phosphate pyrophosphate particle 10 is evenly coated by the carbon coating layer 20. In addition, the carbon coating layer 20 of the sodium iron phosphate pyrophosphate composite particle 100 has a relatively high graphitization degree, enabling the positive electrode particles to have a relatively high electron transfer rate and the relatively low powder electrical resistivity. The positive electrode particles, when applied to the sodium battery, enable the sodium battery to have a longer service life.

In some embodiments, the positive electrode particles further satisfy a relation of I_{D}/I_{G}≤1.2, where: I_{D} represents an intensity of a peak in the Raman pattern of the positive electrode particles in a range from 1330 cm⁻¹ to 1370 cm⁻¹ (also referred to as a defect peak, D-Band, or D peak); and I_{G} represents the intensity of the peak in the Raman pattern of the positive electrode particles in the range from 1570 cm⁻¹ to 1620 cm⁻¹ (also referred to as a graphite peak, G-Band, or G peak).

It should be understood that a ratio of the intensity I_{D} of the peak in the Raman pattern of the positive electrode particles in the range from 1330 cm⁻¹ to 1370 cm⁻¹ to the intensity I_{G} of the peak in the Raman pattern of the positive electrode particles in the range from 1570 cm⁻¹ to 1620 cm⁻¹ is less than or equal to 0.01.

It should be noted that, in the Raman pattern, the peak in the range from 1330 cm⁻¹ to 1370 cm⁻¹ is a peak of D-Band of amorphous carbon.

It should be noted that I_{D}/I_{G} of the present disclosure refers to an average value of I_{D}/I_{G} values derived from the Raman pattern of the plurality of positive electrode particles (e.g., 100, 300, 500, 1000, etc.).

To be specific, I_{D}/I_{G} may be, but not limited to, 0.1, 0.2, 0.3, 0.4, 0.5, 0.6, 0.7, 0.8, 0.9, 1.0, 1.1, 1.2, etc.

In this embodiment, the lower I_{D}/I_{G} indicates a lower content of the amorphous carbon and a higher content of the graphitized carbon in the carbon coating layer 20 of the positive electrode particles, and also indicates a higher graphitization degree and a higher electron transfer rate of the carbon coating layer 20. When I_{D}/I_{G} is excessively high, the content of the amorphous carbon in the carbon coating layer 20 of the positive electrode particles is excessively high, while the content of the graphitized carbon is excessively low, which is neither conducive to the improvement of the electron transfer rate of the positive electrode particles not to the reduction of the powder electrical resistivity of the positive electrode particles.

It should be noted that, when a Raman pattern test is performed on the golden particles among the positive electrode particles of the present disclosure, in addition to the peak in the range from 1330 cm⁻¹ to 1370 cm⁻¹ (i.e., the D peak) and the peak in the range from 1570 cm⁻¹ to 1620 cm⁻¹ (i.e., the G peak), a peak belonging to the sodium iron phosphate pyrophosphate is also present in the range from 960 cm⁻¹ to 1030 cm⁻¹, indicating a relatively low carbon coating degree of the golden particles. In contrast, in a Raman pattern of the gray particles, there are only the peak in the range from 1330 cm⁻¹ to 1370 cm⁻¹ (i.e., the D peak) and the peak in the range from 1570 cm⁻¹ to 1620 cm⁻¹ (i.e., the G peak), without another peak in the range from 960 cm⁻¹ to 1030 cm⁻¹, indicating a relatively high carbon coating degree of the gray particles.

In some embodiments, the positive electrode particles further include sodium iron phosphate particles and sodium iron pyrophosphate particles, and in the positive electrode particles, a mass fraction of the sodium iron phosphate particles is less than or equal to 5%, and a mass fraction of the sodium iron pyrophosphate particles is less than or equal to 5%.

To be specific, in the positive electrode particles, the mass fraction of the sodium iron phosphate particles may be, but not limited to, less than or equal to 5%, less than or equal to 4.5%, less than or equal to 4%, less than or equal to 3.5%, less than or equal to 3%, less than or equal to 2.5%, less than or equal to 2%, less than or equal to 1.5%, less than or equal to 1%, less than or equal to 0.5%, etc.

To be specific, in the positive electrode particles, the mass fraction of the sodium iron pyrophosphate particles may be, but not limited to, less than or equal to 5%, less than or equal to 4.5%, less than or equal to 4%, less than or equal to 3.5%, less than or equal to 3%, less than or equal to 2.5%, less than or equal to 2%, less than or equal to 1.5%, less than or equal to 1%, less than or equal to 0.8%, less than or equal to 0.5%, etc.

During carbon coating of the sodium iron phosphate pyrophosphate to form the carbon coating layer 20, the carbon coating is required to be performed at a relatively high temperature, which will inevitably cause the partial decomposition of the sodium iron phosphate pyrophosphate and the generation of sodium iron phosphate and sodium iron pyrophosphate. When the mass fraction of at least one of the sodium iron phosphate particle and the sodium iron pyrophosphate particle among the positive electrode particles is excessively low, the difficulty of preparing the positive electrode particles is increased, or a carbon coating amount of the positive electrode particles is reduced and the electron transfer rate of the positive electrode particles is lowered. When the mass fraction of at least one of the sodium iron phosphate particle and the sodium iron pyrophosphate particle among the positive electrode particles is excessively high, gram capacity of the positive electrode particles may be reduced. Thus, when such positive electrode particles are applied to the sodium battery, an energy density of the sodium battery is reduced. In the positive electrode particles of the present disclosure, the mass fraction of the sodium iron phosphate particles is less than or equal to 5%, and the mass fraction of the sodium iron pyrophosphate is less than or equal to 5%, indicating a relatively high content of the sodium iron phosphate pyrophosphate in the positive electrode particles. In this way, the positive electrode particles can have a relatively high gram capacity, and thus the positive electrode particles, when applied to the sodium battery, enable the sodium battery to have a higher energy density.

Further, in the positive electrode particles, the mass fraction of the sodium iron phosphate particles is less than or equal to 3%, and the mass fraction of the sodium iron pyrophosphate particles is less than or equal to 4%. In this way, the positive electrode particles can have a relatively low powder electrical resistivity and a relatively high gram capacity

Furthermore, in the positive electrode particles, the mass fraction of the sodium iron phosphate particles is less than or equal to 1%, and the mass fraction of the sodium iron pyrophosphate particles is less than or equal to 2.5%. In this way, the positive electrode particles can have a relatively low powder electrical resistivity and a relatively high gram capacity

In some embodiments, in the positive electrode particles, a mass fraction A of the carbon coating layer 20 satisfies 1%≤A≤10%.

To be specific, in the positive electrode particles, the mass fraction A of the carbon coating layer 20 may be, but not limited to, 1%, 2%, 3%, 4%, 5%, 6%, 7%, 8%, 9%, 10%, etc.

In the positive electrode particle of the present disclosure, the mass fraction of the carbon coating layer may be measured using a high-frequency infrared carbon-sulfur analyzer. Optionally, test conditions for the high-frequency infrared carbon-sulfur analyzer may be, but not limited to, 18 MHz and 2.7 kW.

In this embodiment, when the mass fraction A of the carbon coating layer in the positive electrode particles is excessively low, an electron transfer efficiency of the positive electrode particle is reduced, which is neither conducive to reducing the powder electrical resistivity of the positive electrode particles, nor to prolonging a cycle life of a sodium battery using such positive electrode particles. When the mass fraction A of the carbon coating layer 20 in the positive electrode particles is excessively high, the positive electrode particle can have a relatively low resistivity, but a gram capacity and a powder compaction density of the positive electrode particle are reduced. Consequently, when such positive electrode particles are applied to the positive electrode plate, a compaction density and an energy density of the positive electrode plate are reduced.

In some embodiments, the positive electrode particles have a powder electrical resistivity R satisfying 10Ω·cm≤R≤9999Ω·cm.

To be specific, the powder electrical resistivity R of the positive electrode particles may be, but not limited to, 10Ω·cm, 20Ω·cm, 40Ω·cm, 60Ω·cm, 80Ω·cm, 100Ω·cm, 200Ω·cm, 400Ω·cm, 600Ω·cm, 800Ω·cm, 10³Ω·cm, 3×10³Ω·cm, 5×10³Ω·cm, 6×10³Ω·cm, 7×10³Ω·cm, 8×10³Ω·cm, 9×10³Ω·cm, 9999Ω·cm, etc.

In this embodiment, when the powder electrical resistivity R of the positive electrode particles is excessively low, a content and graphitization degree of the carbon coating layer in the positive electrode particle are required to be increased, which increases the preparation difficulty of the positive electrode particles and reduces the gram capacity of positive electrode particles. When the positive electrode particles have an excessively high powder electrical resistivity and applied to the sodium battery, the internal resistance of the sodium battery is excessively high, and the cycle life of the sodium battery is reduced. The positive electrode particles according to the present embodiment have the relatively low powder electrical resistivity. Such positive electrode particles, when applied to the sodium battery, enable the sodium battery to have a lower internal resistance, facilitating the exertion of the gram capacity of the positive electrode particles, and improving the cycle life of the sodium battery.

Optionally, D10 of the positive electrode particles satisfies 1 µm≤D10≤5 µm, where D10 represents a particle size corresponding to a cumulative volume fraction of 10% in particle size distribution. To be specific, D10 of the positive electrode particles may be, but not limited to, 1 µm, 1.5 µm, 2 µm, 2.5 µm, 3 µm, 3.5 µm, 4 µm, 4.5 µm, 5 µm, etc. When D10 of the positive electrode particles is excessively small, the preparation difficulty of the positive electrode particles is increased. When D10 of the positive electrode particles is excessively great, the powder compaction density of the positive electrode particles is reduced.

Optionally, D50 of the positive electrode particles satisfies 5 µm≤D50≤15 µm, where D50 represents a particle size corresponding to a cumulative volume fraction of 50% in the particle size distribution. To be specific, D50 of the positive electrode particles may be, but not limited to, 5 µm, 6 µm, 7 µm, 8 µm, 9 µm, 10 µm, 11 µm, 12 µm, 13 µm, 14 µm, 15µm, etc. When D50 of the positive electrode particles is excessively small, the powder compaction density of the positive electrode particles is reduced. When D50 of the positive electrode particles is excessively great, the powder compaction density of the positive electrode particles is also reduced.

Optionally, D90 of the positive electrode particles satisfies 15 µm≤D90≤35 µm, where D90 represents a particle size corresponding to a cumulative volume fraction of 90% in the particle size distribution. To be specific, D90 of the positive electrode particles may be, but not limited to, 15 µm, 16 µm, 17 µm, 18 µm, 19 µm, 20µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, etc. When D90 of the positive electrode particles is excessively small, the powder compaction density of the positive electrode particles is reduced. When D90 of the positive electrode particles is excessively great, abnormalities are likely to occur during the processing of the positive electrode plate.

The positive electrode particles of the embodiments of the present disclosure may be prepared by the method described in the following embodiments of the present disclosure. In addition, the positive electrode particles 10 may also be prepared by other methods. The preparation method according to the embodiments of the present disclosure is merely one or more of methods for preparing the positive electrode particles of the present disclosure and should not be construed as limiting the positive electrode particles provided in the embodiments of the present disclosure.

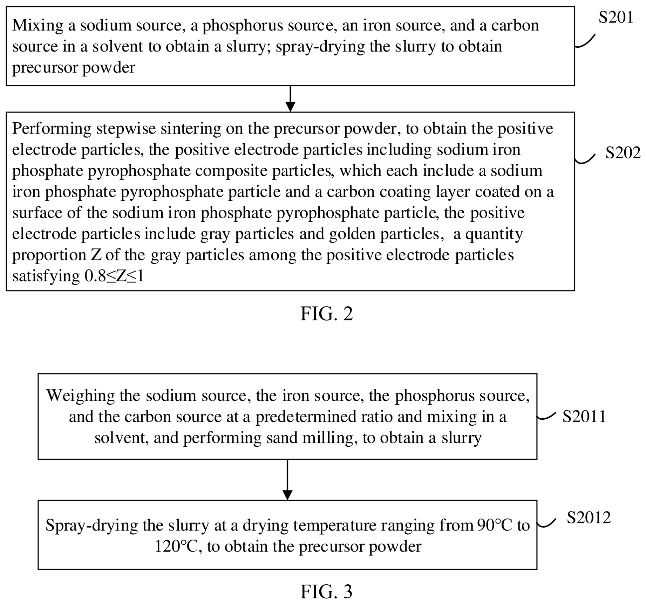

As illustrated in FIG. 2, an embodiment of the present disclosure further provides a method for preparing positive electrode particles. The method includes the following operations.

S201: a sodium source, a phosphorus source, an iron source, and a carbon source are mixed in a solvent to obtain a slurry; and the slurry is spray-dried to obtain precursor powder.

Optionally, the sodium source may be, but not limited to, at least one selected from sodium carbonate, sodium bicarbonate, sodium dihydrogen phosphate, disodium hydrogen phosphate, sodium pyrophosphate, sodium acetate, sodium hydroxide, sodium nitrate, sodium peroxide, sodium citrate, sodium oxalate, or sodium sulfate.

Optionally, the iron source may be, but not limited to, at least one selected from iron phosphate, ferrous oxalate, ferric nitrate, metallic iron, ferric oxide, ferrous oxide, ferric sulfate, ferrous sulfate, ferrous acetate, or ferrosoferric oxide .

Optionally, the phosphorus source may be, but not limited to, at least one selected from ammonium dihydrogen phosphate, ammonium hydrogen phosphate, phosphoric acid, or phosphorus pentoxide.

It should be understood that, one same compound may serve as both the sodium source and the phosphorus source, such as sodium dihydrogen phosphate or sodium pyrophosphate.

Optionally, the carbon source may be, but not limited to, at least one selected from glucose, citric acid, ascorbic acid, polyethylene glycol, acetylene black, graphene, carbon nanotubes, sucrose, or starch.

S202: stepwise sintering is performed on the precursor powder, to obtain the positive electrode particles. The positive electrode particles include sodium iron phosphate pyrophosphate composite particles. Each sodium iron phosphate pyrophosphate composite particle includes a sodium iron phosphate pyrophosphate particle 10 and a carbon coating layer 20 coated on the surface of the sodium iron phosphate pyrophosphate particle 10. The positive electrode particles include the gray particles and the golden particles, the quantity proportion Z of the gray particles among the positive electrode particles satisfying 0.8≤Z≤1.

In the method for preparing the positive electrode particles of the embodiments of the present disclosure, the carbon source is added during the preparation. In addition, the preparation adopts a stepwise sintering process, which enables the prepared sodium iron phosphate pyrophosphate particle 10 to be more sufficiently coated by the carbon coating layer 20 with a higher graphitization degree. In this way, the positive electrode particles have the lower powder electrical resistivity. Further, the stepwise sintering process can well prevent the decomposition of the sodium iron phosphate pyrophosphate particles 10 of the positive electrode particles, thereby improving the gram capacity of the positive electrode particles. The positive electrode particles prepared in the present disclosure include the gray particles and the golden particles, the quantity proportion Z of the gray particles among the positive electrode particles satisfying 0.8≤Z≤1. As the positive electrode particles of the present disclosure have a relatively high quantity proportion of the gray particles, indicating that the positive electrode particles have a relatively high carbon coating degree, a lower powder electrical resistivity, and a relatively high electric conductivity. The positive electrode particles, when applied to the sodium battery, enable the sodium battery to have the longer cycle life.

As illustrated in FIG. 3, in some embodiments, S201 of mixing the sodium source, the phosphorus source, the iron source, and the carbon source in the solvent to obtain the slurry, and spray-drying the slurry to obtain the precursor powder includes the following operations.

S2011: the sodium source, the iron source, the phosphorus source, and the carbon source are weighted at a predetermined ratio and mixed in a solvent, and sand milling is performed to obtain a slurry. Optionally, a molar ratio of sodium, iron, and phosphorus in the sodium source, the iron source, and the phosphorus source is 4:3:4.

Optionally, the sodium source, the phosphorus source, the iron source, and the carbon source are mixed in water to obtain a slurry. The sand milling is performed at a rotating speed ranging from 1000 rpm to 4000 rpm until an average particle size D50' of particles in the slurry is smaller than or equal to 1 µm, with a duration of the sand milling time ranging from 0.5 hour to 4 hours. In this embodiment, the sand milling can reduce a particle size of the particles in the slurry, providing the precondition for formation of the sodium iron phosphate pyrophosphate. In addition, the sand milling enables the thorough and even mixing of soluble substances and insoluble substances in the slurry, avoiding the increased probability of generating impurity phases in finally formed sodium iron phosphate pyrophosphate due to uneven mixing of raw materials when multiple insoluble raw materials are present in the slurry.

In the embodiments of the present disclosure, when referring to a numerical range from a to b, unless otherwise specified, the numerical value may be any numerical value between a and b, including an endpoint value a and an endpoint value b.

To be specific, the duration of the sand milling may be, but not limited to, 0.5 hour, 1 hour, 1.5 hours, 2 hours, 2.5 hours, 3 hours, 3.5 hours, 4 hours, etc. When the duration of the sand milling is excessively short, insoluble raw materials in the sodium source, the phosphorus source, the iron source, and the carbon source may have an excessively great particle size, thereby resulting in the uneven mixing of components and the formation of higher impurity phases in a sintering process. When the duration of the sand milling is excessively long, production efficiency is relatively lower.

To be specific, the rotating speed of the sand milling may be, but not limited to, 1000 rpm, 1500 rpm, 2000 rpm, 2500 rpm, 3000 rpm, 3500 rpm, or 4000 rpm. When the rotating speed of the sand milling is excessively low, the insoluble raw materials in the sodium source, the phosphorus source, the iron source, and the carbon source may have an excessively great particle size, resulting in the uneven mixing of the components and the formation of the higher impurity phases in the sintering process. When the rotating speed of the sand milling is excessively high, the slurry is prone to splashing.

S2012: the slurry is spray-dried at a drying temperature ranging from 90°C to 120°C to obtain the precursor powder

To be specific, the drying temperature may be, but not limited to, 90°C, 92°C, 94°C, 97°C, 98°C, 100°C, 101°C, 102°C, 103°C, 104°C, 105°C, 106°C, 107°C, 108°C, 110°C, 112°C, 114°C, 116°C, 118°C, 120°C, etc.

In this embodiment, when a temperature of spray-drying for the slurry is excessively low, an evaporation rate of the solvent (such as water) is excessively low, leading to an excessively low rate of the spheroidization of the precursor powder. Thus, a hollow spherical morphology or a collapsed spherical morphology is prone to be formed, which affects processing performance and a compaction density of finally prepared positive electrode particles. When the temperature of the spray-drying for the slurry is excessively high, the evaporation rate of the solvent (such as water) is excessively high, leading to an excessively high rate of the spheroidization of the precursor powder. Thus, the formed precursor powder may have a decreased sphericity.

Optionally, the stepwise sintering includes a first-stage sintering, a second-stage sintering, and a third-stage sintering. A temperature of the first-stage sintering is lower than a temperature of the second-stage sintering, and the temperature of the second-stage sintering is lower than a temperature of the third-stage sintering. In this embodiment, three stages of the sintering enable the prepared sodium iron phosphate pyrophosphate particle 10 to be more fully coated by the carbon coating layer 20, with the carbon coating layer 20 having the higher graphitization degree, enabling the positive electrode particles to have the lower powder electrical resistivity. In addition, the stepwise sintering can better improve the uniformity of the components, further improving the gram capacity of the positive electrode particles.

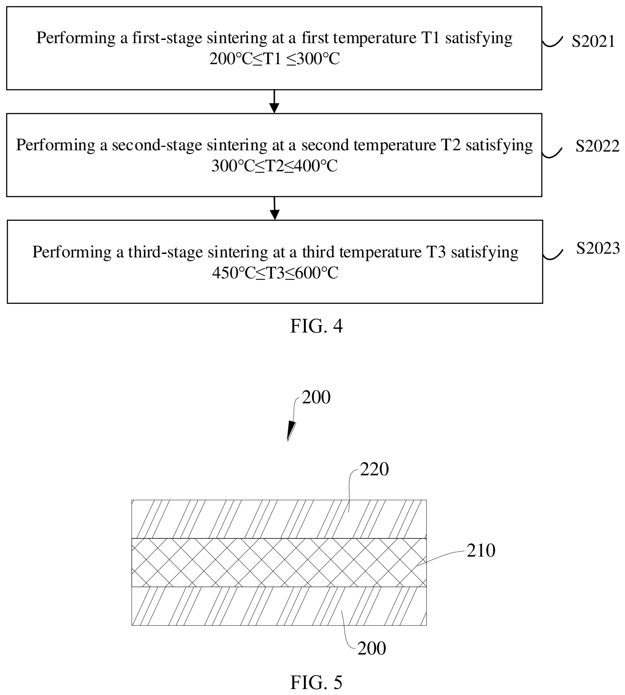

As illustrated in FIG. 4, in some embodiments, in S202, said performing the stepwise sintering on the precursor powder includes the following operations.

S2021, the first-stage sintering is performed at a first temperature satisfying 200°C≤T1 ≤300°C.

Optionally, the first-stage sintering is performed under protection of an inert atmosphere. Optionally, the inert atmosphere includes at least one selected from helium, nitrogen, or argon.

To be specific, the temperature T1 (i.e., the first temperature) of the first-stage sintering may be, but not limited to, 200°C, 210°C, 220°C, 230°C, 240°C, 250°C, 260°C, 270°C, 280°C, 290°C, 300°C, etc. The first-stage sintering enables the components in the precursor powder to be melted and mixed more thoroughly, thereby avoiding the formation of the impurity phases in the prepared positive electrode particles, and improving the gram capacity of the positive electrode particles. When the temperature T1 of the first-stage sintering is excessively low, parts of the components may likely be insufficiently melted, resulting in uneven mixing of the raw materials in the precursor powder, increasing the probability of the formation of the impurity phases in the prepared positive electrode particles, and reducing the gram capacity of the positive electrode particles. When the temperature T1 of the first-stage sintering is excessively high, the precursor powder generates gas earlier, causing uneven distribution of the components in the precursor powder. During the subsequent second-stage sintering and the third-stage sintering, the impurity phases are prone to form in the positive electrode particles, reducing the gram capacity of the positive electrode particles.

Optionally, a holding time of the first-stage sintering ranges from 5 hours to 12 hours. To be specific, the holding time of the first-stage sintering may be, but not limited to, 5 hours, 6 hours, 8 hours, 10 hours, 12 hours, etc. When the holding time of the first-stage sintering is excessively short, parts of the components are prone to be insufficiently melted, resulting in the uneven mixing of the raw materials in the precursor powder, increasing the probability of the formation of the impurity phases in the prepared positive electrode particles, and reducing the gram capacity of the positive electrode particles. When the holding time of the first-stage sintering is excessively long, production efficiency of the positive electrode particles is reduced, and a preparation cost of the positive electrode particles is increased.

S2022: the second-stage sintering is performed at a second temperature T2 satisfying 300°C≤T2≤400°C. Optionally, the second-stage sintering is performed under the protection of the inert atmosphere. Optionally, the inert atmosphere includes at least one selected from helium, nitrogen, or argon

To be specific, the temperature T2 (i.e., the second temperature) of the second-stage sintering may be, but not limited to, 300°C, 310°C, 320°C, 330°C, 340°C, 350°C, 360°C, 370°C, 380°C, 390°C, 400°C, etc. When the temperature T2 of the second-stage sintering is excessively low, the insufficient gas generation of a precursor is more likely to occur, increasing the probability of the formation of the impurity phases in the prepared positive electrode particles and reducing the gram capacity of the positive electrode particles. In addition, internal pores of the prepared positive electrode particles may be excessively large, thereby reducing both the compaction density and the gram capacity of the positive electrode particles. When the temperature T2 of the second-stage sintering is excessively high, impurity phases are prone to be formed in a gas generation process, reducing the gram capacity of the positive electrode particles.

Optionally, a holding time of the second-stage sintering ranges from 8 hours to 20 hours. To be specific, the holding time of the second-stage sintering may be, but not limited to, 8 hours, 10 hours, 12 hours, 14 hours, 16 hours, 18 hours, 20 hours, etc. When the holding time of the second-stage sintering is excessively short, the insufficient gas generation of the precursor is more likely to occur, thereby increasing the probability of the formation of the impurity phases in the prepared positive electrode particles and reducing the gram capacity of the positive electrode particles. In addition, the internal pores of the prepared positive electrode particles may be excessively large, thereby reducing both the compaction density and the gram capacity of the positive electrode particles. When the holding time of the second-stage sintering is excessively long, the production efficiency of the positive electrode particles is reduced, and the preparation cost of the positive electrode particles is increased.

S2023: the third-stage sintering is performed at a third temperature T3 satisfying 450°C≤T3≤600°C

Optionally, the third-stage sintering is performed under the protection of the inert atmosphere. Optionally, the inert atmosphere includes at least one selected from helium, nitrogen, and argon.

To be specific, the temperature T3 (i.e., the third temperature) of the third-stage sintering may be, but not limited to, 450°C, 460°C, 470°C, 480°C, 490°C, 500°C, 510°C, 520°C, 530°C, 540°C, 550°C, 560°C, 570°C, 580°C, 590°C, 600°C, etc. When the temperature T3 of the third-stage sintering is excessively low, a temperature for forming the sodium iron phosphate pyrophosphate cannot be reached, reducing the content of the sodium iron phosphate pyrophosphate in the positive electrode particles and reducing the gram capacity of the positive electrode particles. When the temperature T3 of the third-stage sintering is excessively high, the formed sodium iron phosphate pyrophosphate particles 10 are prone to be decomposed and generate the sodium iron phosphate and the sodium iron pyrophosphate as impurity phases, thereby reducing the gram capacity of the positive electrode particles.

Optionally, a holding time of the third-stage sintering ranges from 8 hours to 20 hours. To be specific, the holding time of the third-stage sintering may be, but not limited to, 8 hours, 10 hours, 12 hours, 14 hours, 16 hours, 18 hours, 20 hours, etc. When the holding time of the third-stage sintering is excessively short, phase formation of the sodium iron phosphate pyrophosphate particle 10 is incomplete or excessively insufficient, reducing the gram capacity of the positive electrode particles. When the holding time of the third-stage sintering is excessively long, the production efficiency of the positive electrode particles is reduced, and the preparation cost of the positive electrode particles is increased.

As illustrated in FIG. 5, an embodiment of the present disclosure further provides a positive electrode plate 200. The positive electrode plate 200 includes a positive electrode current collector 210 and a positive electrode active layer 220. The positive electrode active layer 220 includes the positive electrode particles according to the embodiments of the present disclosure.

For detailed description of other aspects of the positive electrode particles, reference is made to the corresponding parts of the above embodiments. The detailed description will not be repeated herein.

Optionally, the positive electrode current collector 210 may be, but not limited to, a carbon-coated aluminum foil, a pure aluminum foil, or an aluminum plate.

Optionally, the positive electrode active layer 220 further includes a positive electrode conductive agent, a positive electrode binder, a positive electrode thickener, etc.

Optionally, the positive electrode conductive agent may be, but not limited to, at least one selected from conductive carbon black, acetylene black, carbon nanotubes, carbon fibers, or graphene.

Optionally, the positive electrode binder may be, but not limited to, at least one selected from polyvinylidene fluoride (PVDF), polyamide (PA), polyacrylonitrile (PAN), polyacrylate, polyvinylether, polymethyl methacrylate (PMMA), polyhexafluoropropylene, or polymerized styrene butadiene rubber (SBR).

In some embodiments, the positive electrode plate 200 has a film resistivity M satisfying0.1Ω·m≤M≤5Ω·m.

To be specific, the film resistivity M of the positive electrode plate 200 may be, but not limited to, 0.1Ω·m, 0.2Ω·m, 0.4Ω·m, 0.6Ω·m, 0.8Ω·m, 1Ω·m, 1.5Ω·m, 2Ω·m, 2.5Ω·m, 3Ω·m, 3.5Ω·m, 4Ω·m, 4.5Ω·m, 5Ω·m, etc. When the film resistivity M of the positive electrode plate 200 is excessively low, a content of a conductive agent in the positive electrode plate 200 must be increased, which increases preparation difficulty of the positive electrode plate 200 and reduces capacity of the positive electrode plate 200. When the positive electrode plate 200 has an excessively high film resistivity M and is applied to the sodium battery, the internal resistance of the sodium battery may be excessively high, and the cycle life of the sodium battery is shortened. The positive electrode plate 200 of this embodiment has a relatively low film resistivity. Such a positive electrode plate 200, when applied to the sodium battery, enables the sodium battery to have the lower internal resistance, facilitating exertion of the capacity of the sodium battery, and improving the cycle life of the sodium battery.

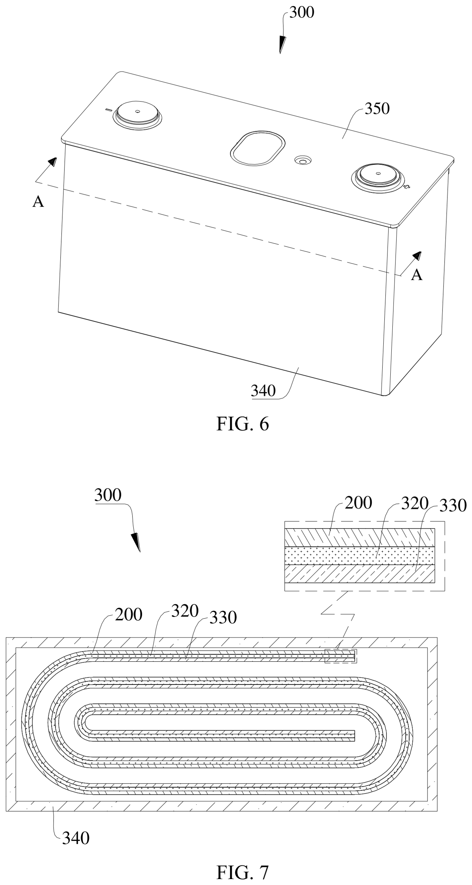

As illustrated in FIG. 6 and FIG. 7, an embodiment of the present disclosure further provides a sodium battery 300. The sodium battery 300 includes an electrolyte, the positive electrode plate 200 according to the embodiments of the present disclosure, a separator 320, and a negative electrode plate 350.

For detailed description of other aspects of the positive electrode plate 200, reference is made to the corresponding parts of the above embodiments. The detailed description will not be repeated herein.

The sodium battery 300 of the embodiments of the present disclosure may be, but not limit to, at least one selected from a sodium-ion battery, a sodium-metal battery, or a lithium-sodium hybrid battery.

It should be understood that the positive electrode plate 200 and the negative electrode plate 330 are respectively located at two opposite sides of the separator 320, that is, the separator 320 is located between the positive electrode plate 200 and the negative electrode plate 330 to separate the positive electrode plate 200 from the negative electrode plate 330.

It should be noted that the positive electrode plate 200, the separator 320, and the negative electrode plate 330 are all at least partially immersed in the electrolyte.

Optionally, the electrolyte includes electrolyte salt, an organic solvent, and a film-forming additive.

Optionally, the electrolyte salt may include, but not limited to, sodium salt. Optionally, the sodium salt may be, but not limited to, at least one selected from sodium hexafluorophosphate (NaPF₆), sodium tetrafluoroborate (NaBF₄), sodium bis(fluorosulfonyl)imide, sodium bis(trifluoromethanesulfonyl)imide, sodium bis(oxalato)borate, sodium difluorobis(oxalato)phosphate, sodium difluoro(oxalato)borate, sodium difluorophosphate (NaPO₂F₂), or sodium trifluoromethanesulfonate (CF₃SO₃Na).

Optionally, the organic solvent may include at least one selected from cyclic carbonate and linear carbonate. Optionally, the cyclic carbonate may include, but not limited to, at least one selected from ethylene carbonate (EC) or propylene carbonate (PC). A dielectric constant of the ethylene carbonate is much greater than a dielectric constant of the propylene carbonate, and the ethylene carbonate can better facilitate formation of a solid electrolyte interface (SEI) membrane. Optionally, the linear carbonate may include, but not limited to, at least one selected from dimethyl carbonate (DMC), diethyl carbonate (DEC), or ethyl methyl carbonate (EMC). Optionally, the organic solvent further includes at least one selected from ethyl acetate, propyl acetate, ethyl propionate, propyl propionate, γ-butyrolactone, and 2,2-difluoroethyl acetate.

Optionally, the film-forming additive may include, but not limited to, at least one selected from propargyl benzenesulfonate, vinylene carbonate (VC), fluoroethylene carbonate (FEC), ethylene sulfate (DTD), methylene methanedisulfonate (MMDS), butane sultone (BS), or 1,3-propenesultone (PST).

Optionally, the separator 320 may be, but not limited to, at least one selected from a polypropylene membrane (PP membrane), a polyethylene membrane (PE membrane), a ceramic membrane, or a glass fiber membrane.

Optionally, a thickness of the separator 320 ranges from 10 µm to 18 µm. To be specific, the thickness of the separator 320 may be, but not limited to, 10 µm, 11 µm, 12 µm, 13 µm, 14 µm, 14.5 µm, 15 µm, 15.5 µm, 16 µm, 16.5 µm, 17 µm, 17.5 µm, 18 µm, etc.

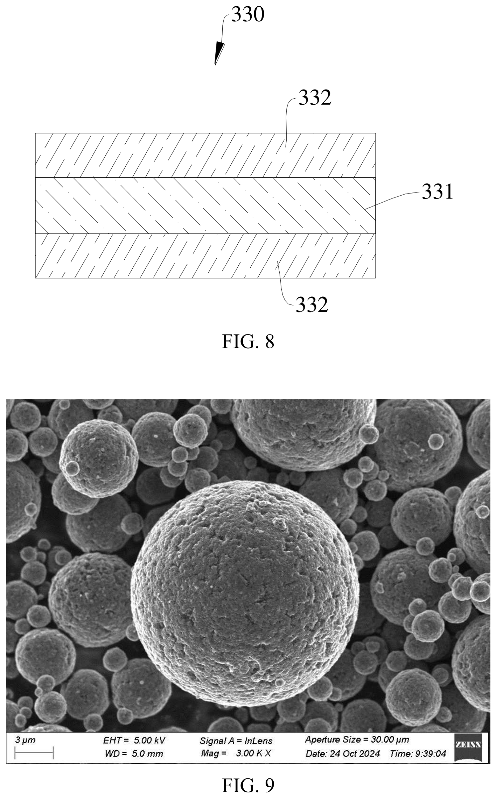

As illustrated in FIG. 8, optionally, the negative electrode plate 330 includes a negative electrode current collector 331 and a negative electrode active layer 332.

Optionally, the negative electrode current collector 331 may be, but not limited to, a copper foil, a copper plate, an aluminum foil, or a carbon-coated aluminum foil.

Optionally, the negative electrode active layer 332 includes a negative electrode active material, a negative electrode conductive agent, a negative electrode binder, a negative electrode thickener, etc.

Optionally, the negative electrode active material may be, but not limited to, hard carbon.

Optionally, the negative electrode conductive agent may be, but not limited to, at least one selected from conductive carbon black (SP), acetylene black, carbon nanotubes, carbon fibers, graphene, etc.

Optionally, the negative electrode binder may be, but not limited to, at least one selected from polyvinylidene fluoride, polyamide, polyacrylonitrile, polyacrylate, polyvinylether, polymethyl methacrylate, polyhexafluoropropylene, or polymerized styrene butadiene rubber.

Optionally, the negative electrode thickener may be, but not limited to, at least one selected from sodium carboxymethylcellulose (CMC), polyacrylamide (PAM), or polymethacrylate (PMA).

Optionally, the sodium battery 300 further includes a housing 340 and an end cover assembly 350. The housing 340 and the end cover assembly 350 enclose to form a closed receiving cavity (not shown) configured to receive the electrolyte, the positive electrode plate 200, the separator 320, and the negative electrode plate 330. It should be understood that the end cover assembly 350 is electrically connected to the positive electrode plate 200 and the negative electrode plate 330, and enables the positive electrode plate 200 and the negative electrode plate 330 to lead out and to be electrically connected to external devices or other sodium batteries 300.

The positive electrode particles of the embodiments of the present disclosure are further described below through specific examples.

### Example 1

The positive electrode particles of the present example were prepared through the following operations.
(1) Sodium pyrophosphate, ammonium dihydrogen phosphate, and ferrous oxalate dihydrate were weighed in predetermined proportions, to ensure a molar ratio of sodium: iron: phosphorus to satisfy 4:3:4. Glucose was weighed as the carbon source, with a mass fraction of the glucose in raw materials (a total mass of sodium pyrophosphate, ammonium dihydrogen phosphate, ferrous oxalate dihydrate, and glucose) being 7%. Sodium pyrophosphate, ammonium dihydrogen phosphate, ferrous oxalate dihydrate, and glucose were evenly stirred in water and sand-milled until a particle size D50' was smaller than or equal to 1 µm, to obtain a slurry.
(2) The slurry was spray-dried at 110°C to obtain precursor powder.
(3) The precursor powder was placed in a sintering furnace to perform the first-stage sintering at a temperature of 250°C under nitrogen protection for 6 hours.
(4) In the sintering furnace, under the nitrogen protection, the second-stage sintering was performed at a temperature of 350°C for 10 hours.
(5) In the sintering furnace, under the nitrogen protection, the third-stage sintering was performed at a temperature of 550°C for 10 hours, to obtain the positive electrode particles.

### Comparative Example 1

The positive electrode particles of the present comparative example were prepared through the following operations.
(1) Sodium pyrophosphate, ammonium dihydrogen phosphate, and ferrous oxalate dihydrate were weighed in predetermined proportions, to ensure a molar ratio of sodium: iron: phosphorus to satisfy 4:3:4. Glucose was weighed as the carbon source, with a mass fraction of the glucose in raw materials (a total mass of the sodium pyrophosphate, ammonium dihydrogen phosphate, ferrous oxalate dihydrate, and glucose) being 7%. Sodium pyrophosphate, ammonium dihydrogen phosphate, ferrous oxalate dihydrate, and glucose were evenly stirred in water and sand-milled until a particle size D50' was smaller than or equal to 1 µm, to obtain a slurry.
(2) The slurry was spray-dried at 110°C to obtain precursor powder.
(3) The precursor powder was sintered in the sintering furnace under the nitrogen protection at a temperature of 550°C for 10 hours, to obtain the positive electrode particles.

### Comparative Example 2

The positive electrode particles of the present comparative example were prepared through the following operations.
(1) Sodium pyrophosphate, ammonium dihydrogen phosphate, and ferrous oxalate dihydrate were weighed in predetermined proportions, to ensure a molar ratio of sodium: iron: phosphorus to satisfy 4:3:4. Glucose was weighed as the carbon source, with a mass fraction of the glucose in raw materials (a total mass of the sodium pyrophosphate, ammonium dihydrogen phosphate, ferrous oxalate dihydrate, and glucose) being 7%. Sodium pyrophosphate, ammonium dihydrogen phosphate, ferrous oxalate dihydrate, and glucose were evenly stirred in water and sand-milled until a particle size D50' was smaller than or equal to 1 µm, to obtain a slurry.
(2) The slurry was spray-dried at 110°C to obtain precursor powder.
(3) The precursor powder was sintered in the sintering furnace under the nitrogen protection at a temperature of 250°C for 6 hours.
(4) A sintering was performed in the sintering furnace under the nitrogen protection at a temperature of 550°C for 10 hours, to obtain the positive electrode particles.

### Comparative Example 3

The positive electrode particles of the present comparative example were prepared through the following operations.
(1) Sodium pyrophosphate, ammonium dihydrogen phosphate, and ferrous oxalate dihydrate were weighed in predetermined proportions, to ensure a molar ratio of sodium: iron: phosphorus to satisfy 4:3:4. Glucose was weighed as the carbon source, with a mass fraction of the glucose in raw materials (a total mass of the sodium pyrophosphate, ammonium dihydrogen phosphate, ferrous oxalate dihydrate, and glucose) being 7%. Sodium pyrophosphate, ammonium dihydrogen phosphate, ferrous oxalate dihydrate, and glucose were evenly stirred in water and sand-milled until a particle size D50' was smaller than or equal to 1 µm, to obtain a slurry.
(2) The slurry was spray-dried at 110°C to obtain precursor powder.
(3) The precursor powder was sintered in the sintering furnace under the nitrogen protection at a temperature of 350°C for 10 hours.
(5) A sintering was performed in the sintering furnace under the nitrogen protection at a temperature of 550°C for 10 hours, to obtain the positive electrode particles.

The following performance tests were performed on the positive electrode particles prepared in Example 1 and Comparative Example 1 to Comparative Example 3.
(1) Carbon content test: measurement was performed using a high-frequency infrared carbon-sulfur analyzer, under the test conditions of 18 MHz and 2.7 kW.
(2) Gray particle quantity proportion test: under an optical microscope, a region was selected, and a number of particles (e.g., 100, 200, 300, 400, etc.) were selected in the region for statistics. The quantity of the golden particles and the quantity of the gray particles were separately calculated, and the quantity proportion Z of the gray particles was further calculated, where Z=the quantity of the gray particles/(the quantity of the golden particles+ the quantity of the gray particles).
(3) Powder electrical resistivity test: measurement was performed using a two-probe method, with a test parameter of the applied pressure ranging from 0 MPa to 200 MPa.
(4) Discharge gram capacity test: a positive electrode slurry was prepared using the positive electrode particles, polyvinylidene fluoride (PVDF), and conductive carbon black (SP) at a mass ratio of 8:1:1. Subsequently, the positive electrode slurry was coated on an aluminum foil (as the positive electrode current collector 210). The positive electrode slurry, after subjected to drying, was rolled and cut into a small circular plate to serve as the positive electrode plate 200. A composite sodium plate was used as a negative electrode, a glass fiber membrane was used as the separator 320, and sodium hexafluorophosphate (1 mol/L) was used as the electrolyte, with which a button-type sodium battery 300 was assembled. The assembled button-type sodium battery 300 was tested on test channels, manufactured by LAND Electronic Co., Ltd. of Landian or Neware Technology limited, and subjected to charge-discharge cycles at a rate of 0.1C within a voltage range of 1.5 V to 3.5 V. The gram capacity of the positive electrode particles was obtained based on charge-discharge cycle test data.
(5) Film resistivity test: A positive electrode slurry was prepared using the positive electrode particles, polyvinylidene fluoride (PVDF), and conductive carbon black (SP) at a mass ratio of 8:1:1. Subsequently, the positive electrode slurry was coated on an aluminum foil (as the positive electrode current collector 210). The dried positive electrode slurry, after being dried, was rolled to form the positive electrode plate 200. The rolled positive electrode plate 200 was cut into a rectangle with a dimension of 5 cm×10 cm. Thicknesses of 10 random positions of the positive electrode plate 200 were measured using a micrometer, to calculate an average value of the thicknesses of the positive electrode plate 200. The positive electrode plate 200 was then placed between two electrodes of a film resistance tester. A test pressure and a pressure holding time were set on the MRMS software, and the test was initiated. The film resistivity of the positive electrode plate 200 was automatically calculated by the tester. For each positive electrode plate 200, the test was performed on 10 random positions, and a final average value of the film resistivity of the positive electrode plate 200 was calculated.

Test results of the positive electrode particles prepared in Example 1 and Comparative Example 1 to Comparative Example 3 are shown in Table 1 below.

**[Table 1] Performance parameters of the positive electrode particles in Example 1 and Comparative Example 1 to Comparative Example 3**

| Example | Carbon content A/% | Quantity proportion Z of gray particles | Powder electrical resistivity R/Ω·cm | Film resistivity M of positive electrode plate M/Ω·m | Discharge gram capacity /mAh/g |
|---|---|---|---|---|---|
| Example 1 | 2 | 0.9 | 8×10² | 1.5 | 110 |
| Comparative Example 1 | 2 | 0.33 | 2×10⁷ | 11 | 100 |
| Comparative Example 2 | 2 | 0.58 | 5×10⁵ | 8.9 | 102 |
| Comparative Example 3 | 2 | 0.71 | 9×10⁴ | 7.5 | 103 |

The test results of Example 1 and Comparative Example 1 to Comparative Example 3 in Table 1 reveal that, compared with those prepared by single-stage sintering (i.e., Comparative Example 1) or two-stage sintering (i.e., Comparative Example 2 and Comparative Example 3), the positive electrode particles prepared by three-stage sintering in Example 1 of the present disclosure have a higher quantity proportion of the gray particles with the same carbon content, and the powder electrical resistivity of the positive electrode particles is significantly reduced. Compared with Comparative Example 1 and Comparative Example 3, the powder electrical resistivity is reduced by 2 to 5 orders of magnitude. In addition, the positive electrode plate 200 prepared with the positive electrode particles of Example 1 have a lower film resistivity. Compared with the positive electrode plates 200 prepared with the positive electrode particles of Comparative Example 1 to Comparative Example 3, the film resistivity of the positive electrode plate 200 in Example 1 is reduced to 1/7.33 to 1/5 of the initial value. Moreover, the positive electrode particles prepared by the three-stage sintering in Example 1 of the present disclosure also have a higher discharge gram capacity.

A scanning electron microscope (SEM) image of the positive electrode particles prepared in Example 1 is illustrated in FIG. 9. FIG. 9 reveals that subsequent to the three-stage sintering, spherical positive electrode particles with varying particle sizes were obtained.

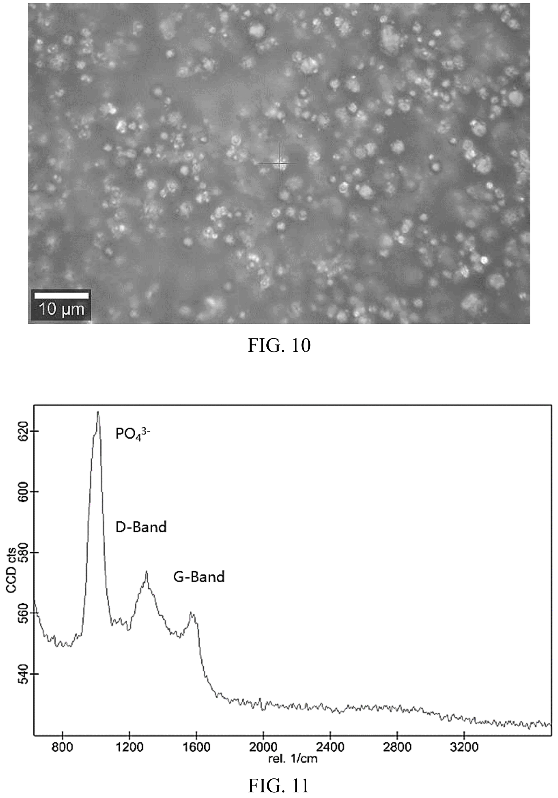

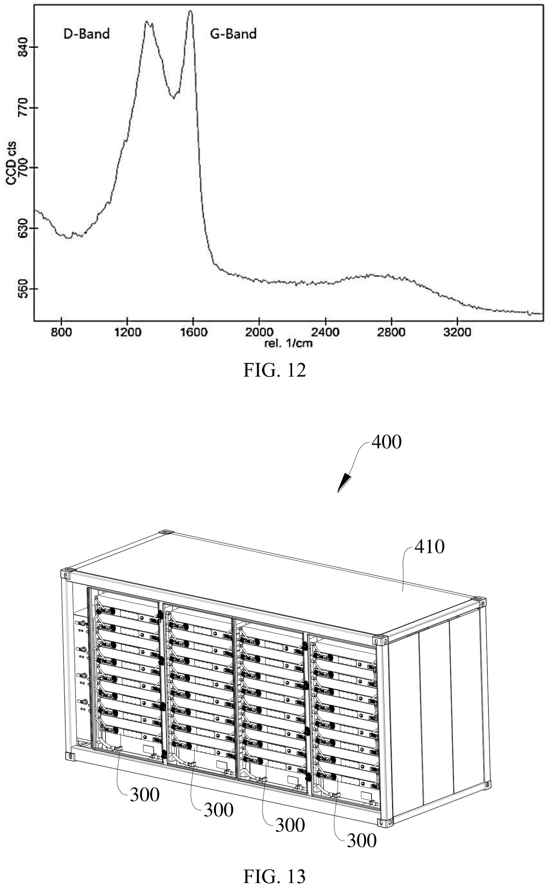

FIG. 10 is an optical microscope image of the positive electrode particles prepared in Example 1 of the present disclosure, obtained using the Raman spectrometer. FIG. 11 is a Raman spectrum of golden particles in FIG. 10. FIG. 12 is a Raman spectrum of gray particles in FIG. 10.

It can be seen from FIG. 10 that the positive electrode particles prepared in Example 1 include the golden particles and the gray particles. It can be seen from FIG. 11 that in the Raman spectrum of the golden particles, a peak of P-O bond in phosphate ions (PO₄³⁻) is present in the range from 960 cm⁻¹ to 1030 cm⁻¹, a peak of D-band of amorphous carbon is present in the range from 1330 cm⁻¹ to 1370 cm⁻¹, and a peak of G-band of graphitized carbon is present in a range from 1570 cm⁻¹ to 1620 cm⁻¹. It can be seen from FIG. 12 that in the Raman spectrum of the gray particles, no peak of the P-O bond in the phosphate ions (PO₄³⁻) is present in the range from 960 cm⁻¹ to 1030 cm⁻¹, while a peak of the D-band of the amorphous carbon is present in the range from 1330 cm⁻¹ to 1370 cm⁻¹ and a peak of the G-band of the graphitized carbon is present in the range from 1570 cm⁻¹ to 1620 cm⁻¹.

### Example 2

Example 2 differed from Example 1 in that the third-stage sintering in the present example was performed at a temperature of 450°C.

### Example 3

Example 3 differed from Example 1 in that the third-stage sintering in the present example was performed at a temperature of 500°C.

### Example 4

Example 4 differed from Example 1 in that the third-stage sintering in the present example was performed at a temperature of 600°C.

### Comparative Example 4

Comparative example 4 differed from Example 1 in that the third-stage sintering in the present comparative example was performed at a temperature of 400°C.

### Comparative Example 5

Comparative example 5 differed from Example 1 in that the third-stage sintering in the present comparative example was performed at a temperature of 650°C.

Test results of the positive electrode particles prepared in Example 2 to Example 4, and Comparative Example 4 and Comparative Example 5 are shown in Table 2 below.

**[Table 2] Performance parameters of the positive electrode particles in Example 2 to Example 4, and Comparative Example 4 and Comparative Example 5**

| Example | Carbon content A/% | Quantity proportion Z of the gray particles | Powder electrical resistivity R/Ω·cm | Film resistivity M/Ω·m | Discharge gram capacity /mAh/g |
|---|---|---|---|---|---|
| Example 2 | 4 | 0.8 | 9×10³ | 4.3 | 108 |
| Example 3 | 3 | 0.85 | 2×10³ | 3.1 | 109 |
| Example 4 | 1.8 | 0.95 | 1×10² | 1 | 112 |
| Comparative Example 4 | 6 | 0.3 | 7×10⁷ | 13.8 | 30 |
| Comparative Example 5 | 1.1 | 1 | 10 | 0.1 | 80 |

The test results of Example 1 to Example 4, and Comparative Example 4 and Comparative Example 5 in Table 1 and Table 2 reveal that when the temperature of the third-stage sintering is excessively low (e.g., Comparative Example 4), the prepared positive electrode particles have a relatively high carbon content, the quantity proportion of the gray particles among the positive electrode particles is relatively low, the positive electrode particles have a relatively high powder electrical resistivity, the positive electrode plate 200 prepared with the positive electrode particles have a relatively high film resistivity, and the discharge gram capacity of the positive electrode particles is also significantly reduced. With an increase in the temperature of the third-stage sintering (Example 1 to Example 4), the carbon content of the prepared positive electrode particles gradually decreases, the quantity proportion of the gray particles among the positive electrode particles gradually increases, the powder electrical resistivity of the positive electrode particles gradually decreases, the film resistivity of the positive electrode plate 200 prepared with the positive electrode particles gradually decreases, and the discharge gram capacity of the positive electrode particles gradually increases. When the temperature of the third-stage sintering continues to increase (e.g., Comparative Example 5), the carbon content of the prepared positive electrode particles continues to decrease, the quantity proportion of the gray particles among the positive electrode particles continues to increase, the powder electrical resistivity of the positive electrode particles continues to decrease, and the film resistivity of the positive electrode plate 200 prepared with the positive electrode particles also continues to decrease. However, the discharge gram capacity of the positive electrode particles is significantly reduced, indicating that a large amount of the sodium iron phosphate pyrophosphate in the positive electrode particles is decomposed at an excessively high temperature of the third-stage sintering, thereby significantly reducing the discharge gram capacity of the positive electrode particles.

### Example 5

Example 5 differed from Example 1 in that the first-stage sintering in the present example was performed at a temperature of 200°C.

### Example 6

Example 6 differed from Example 1 in that the first-stage sintering in the present example was performed at a temperature of 300°C.

### Example 7

Example 7 differed from Example 1 in that the second-stage sintering in the present example was performed at a temperature of 300°C.

### Example 8

Example 8 differed from Example 1 in that the second-stage sintering in the present example was performed at a temperature of 400°C.

### Comparative Example 6

Comparative example 6 differed from Example 1 in that the first-stage sintering in the present comparative example was performed at a temperature of 150°C.

### Comparative Example 7

Comparative example 7 differed from Example 1 in that the first-stage sintering in the present comparative example was performed at a temperature of 320°C.

### Comparative Example 8

Comparative example 8 differed from Example 1 in that the second-stage sintering in the present comparative example was performed at a temperature of 270°C.

### Comparative Example 9

Comparative example 9 differed from Example 1 in that the second-stage sintering in the present comparative example was performed at a temperature of 430°C.

Test results of the positive electrode particles prepared in Example 5 to Example 8, and Comparative Example 6 to Comparative Example 9 are shown in Table 3 below.

**[Table 3] Performance parameters of the positive electrode particles in Example 5 to Example 8, and Comparative Example 6 to Comparative Example 9**

| Example | Carbon content A/% | Quantity proportion Z of gray particles | Powder electrical resistivity R/Ω·cm | Film resistivity M/Ω·m | Discharge gram capacity /mAh/g |
|---|---|---|---|---|---|
| Example 5 | 2 | 0.9 | 8×10² | 1.5 | 108 |
| Example 6 | 2 | 0.9 | 8×10² | 1.5 | 111 |
| Example 7 | 2.1 | 0.89 | 9×10² | 1.7 | 110 |
| Example 8 | 1.9 | 0.92 | 6×10² | 1.2 | 110 |
| Comparative Example 6 | 2 | 0.9 | 8×10² | 1.5 | 105 |
| Comparative Example 7 | 2 | 0.9 | 8×10² | 1.5 | 104 |
| Comparative Example 8 | 2.3 | 0.86 | 5×10³ | 4.5 | 105 |
| Comparative | 1.8 | 0.93 | 5×10² | 1 | 104 |
| Example 9 | | | | | |

It can be seen from the test results of Example 1, Example 5, Example 6, Comparative Example 6, and Comparative Example 7 that the temperature of the first-stage sintering has almost no impact on the carbon content of the prepared positive electrode particles, the quantity proportion of the gray particles among the positive electrode particles, the powder electrical resistivity of the positive electrode particles, and the film resistivity of the positive electrode plate 200 prepared with the positive electrode particles. However, with an increase in the temperature of the first-stage sintering, the discharge gram capacity of the prepared positive electrode particles first gradually increases and then gradually decreases.

It can be seen from the test results of Example 1, Example 7, Example 8, Comparative Example 8, and Comparative Example 9 that with an increase in the temperature of the second-stage sintering, the carbon content of the prepared positive electrode particles gradually decreases, the quantity proportion of the gray particles among the positive electrode particles gradually increases, the powder electrical resistivity of the positive electrode particles gradually decreases, the film resistivity of the positive electrode plate 200 prepared with the positive electrode particles gradually decreases, and the discharge gram capacity of the prepared positive electrode particles first gradually increases and then gradually decreases.

The test results of the above examples and the comparative examples reveal that: the changes in the temperature of the third-stage sintering have the most significant impact on the carbon content, the powder electrical resistivity, the quantity proportion of the gray particles, the film resistivity, and other performances of the positive electrode particles; the changes in the temperature of the second-stage sintering have the second most significant impact on the carbon content, the powder electrical resistivity, the quantity proportion of the gray particles, and the film resistivity of the positive electrode particles; and the changes in the temperature of first-stage sintering have the least significant impact on the carbon content, the powder electrical resistivity, the quantity proportion of the gray particles, and the film resistivity of the positive electrode particles among the three stages.

### Example 9 to Example 14, and Comparative Example 10 and Comparative 11

Example 9 to Example 14, and Comparative Example 10 and Comparative Example 11 differed from Example 1 in the addition amounts of the carbon source, which result in different carbon contents of the positive electrode particles in different examples.

Test results of the positive electrode particles prepared in Example 9 to Example 14, and Comparative Example 10 and Comparative Example 11 are shown in Table 4 below.

**[Table 4] Performance parameters of the positive electrode particles in Example 9 to Example 14, and Comparative Example 10 and Comparative Example 11**

| Example | Carbon content A/% | Quantity proportion Z of gray particles | Powder electrical resistivity R/Ω·cm | Film resistivity M/Ω·m | Discharge gram capacity /mAh/g |
|---|---|---|---|---|---|
| Example 9 | 1 | 0.9 | 9.8×10² | 2 | 111 |
| Example 1 | 2 | 0.9 | 8×10² | 1.5 | 110 |
| Example 10 | 3 | 0.9 | 7.5×10² | 1.2 | 109 |
| Example 11 | 5 | 0.9 | 7×10² | 1 | 107 |
| Example 12 | 7 | 0.9 | 6.5×10² | 0.95 | 105 |
| Example 13 | 8 | 0.9 | 6.1×10² | 0.9 | 104 |
| Example 14 | 10 | 0.9 | 5.8×10² | 0.85 | 102 |
| Comparative Example 10 | 0.5 | 0.9 | 9×10³ | 2.7 | 111 |
| Comparative Example 11 | 13 | 0.9 | 5.4×10² | 0.84 | 99 |

It can be seen from the test results of Example 1, Example 9 to Example 14, and Comparative Example 10 and Comparative Example 11 that: under the condition that other conditions remain unchanged, as the carbon content of the positive electrode particles increases by adjusting the carbon content of the positive electrode particles, the powder electrical resistivity of the positive electrode particles gradually decreases, the film resistivity of the positive electrode plate 200 prepared with the positive electrode particles gradually decreases, and the discharge gram capacity of the positive electrode particles also gradually decreases.

As illustrated in FIG. 13, an embodiment of the present disclosure further provides an energy storage apparatus 400. The energy storage apparatus 400 includes a casing 410, and the sodium battery 300 according to the embodiments of the present disclosure received in the casing 410.

The energy storage apparatus 400 of the present disclosure may be applied to, but not limited to, generation-side energy storage, grid-side energy storage, and user-side energy storage, etc.

Optionally, the number of the sodium batteries 300 may be, but not limited to, one or more. When a plurality of sodium batteries 300 are provided, the plurality of sodium batteries 300 are stacked and disposed in the casing 410. It should be understood that the stacking arrangement of the plurality of sodium batteries 300 may be the plurality of sodium batteries 300 arranged in sequence, where each sodium battery 300 abutting with an adjacent sodium battery 300, or may be the plurality of sodium batteries 300 arranged in sequence at intervals. In addition, the plurality of sodium batteries 300 may be stacked in a transverse direction (e.g., in a horizontal direction) or in a longitudinal direction (e.g., in a gravity direction). A stacking manner and a stacking direction of the plurality of sodium batteries 300 may be designed based on actual conditions, which are not specifically limited in the present disclosure.

The term "plurality" refers to two or more.

It should be understood that the plurality of sodium batteries 300 of the energy storage apparatus 400 may be mutually connected in parallel; or mutually connected in series; or partially connected in parallel and partially connected in series (in other words, in hybrid connection). A connection manner of the plurality of sodium batteries 300 in a same energy storage apparatus 400 is not specifically limited in the present disclosure.

Optionally, the energy storage apparatus 400 may include, but not limited to, a sodium battery 300 module, a sodium battery 300 pack, a sodium battery 300 system, an energy storage casing, an energy storage cabinet, an energy storage container, etc. An actual application form of the energy storage apparatus 400 provided in the embodiments of the present disclosure may be, but not limited to, the listed products, and may also be other application forms. The application form of the energy storage apparatus 400 is not strictly limited in the embodiments of the present disclosure. In the accompanying drawings of the embodiments of the present disclosure, the energy storage apparatus 400 including the plurality of sodium batteries 300 is merely illustrated as an example and should not be construed as a limitation on the energy storage apparatus 400 of the embodiments of the present disclosure.

It should be understood that, the casing 410 has a receiving cavity, in which one or the plurality of sodium batteries 300 are received. In some embodiments, each receiving cavity receives one sodium battery 300. In other embodiments, each receiving cavity receives the plurality of sodium batteries 300.

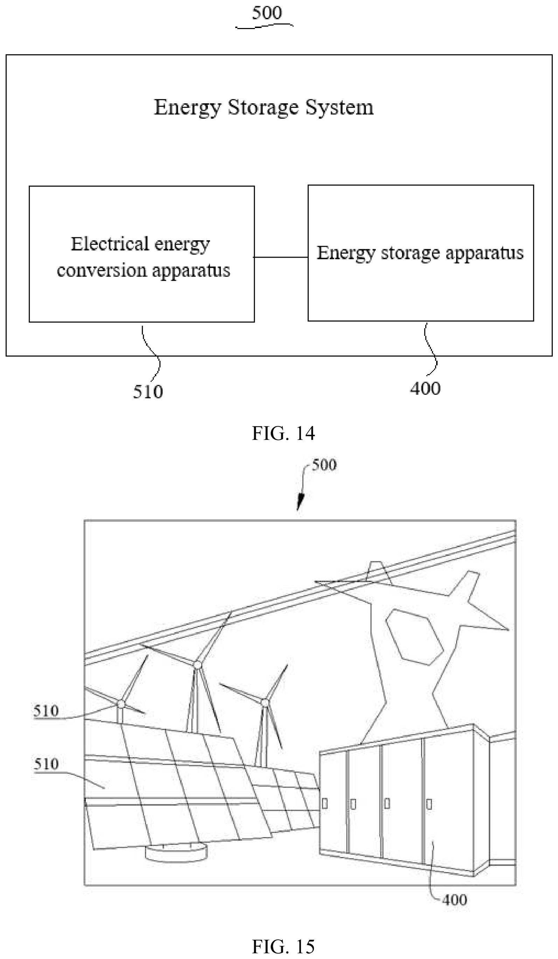

As illustrated in FIG. 14 and FIG. 15, an embodiment of the present disclosure further provide an energy storage system 500. The energy storage system 500 includes the energy storage apparatus 400 according to the embodiments of the present disclosure, and an electrical energy conversion apparatus 510. The electrical energy conversion apparatus 510 is electrically connected to the energy storage apparatus 400. The electrical energy conversion apparatus 510 is configured to convert other forms of energy into the electrical energy, and store the electrical energy.

It should be noted that energy storage (i.e., storage of energy) has a wide range of application scenarios, including the generation-side energy storage, the grid-side energy storage, and the user-side energy storage, etc. The energy storage system 500 of the embodiments of the present disclosure is described in detail by taking the generation-side energy storage as an example, which should not be construed as a limitation on the energy storage system 500 of the embodiments of the present disclosure, nor as a limitation on the energy storage apparatus 400 and the sodium battery 300 of the embodiments of the present disclosure.

During operation, the electrical energy conversion device 510 is configured to convert other forms of energy into the electrical energy, and the electrical energy is then stored in the energy storage apparatus 400. The electrical energy stored in the energy storage apparatus 400 can be supplied to electrical loads such as street lamps and household appliances for use during peak electricity price periods, or provide power in the event of grid power outages or blackouts. In addition, the electrical energy converted by the electrical energy conversion apparatus 510 can be supplied to the power grid through high-voltage cables to alleviate a power supply pressure during grid peak periods.

Optionally, the electrical energy conversion apparatus 510 can convert at least one of other forms of energy such as solar energy, light energy, wind energy, thermal energy, tidal energy, biomass energy, and mechanical energy into the electrical energy.

Optionally, the number of the electrical energy conversion apparatus 510 may be one or more. When a plurality of electrical energy conversion apparatus 510 are provided, the plurality of electrical energy conversion apparatus 510 may be connected in series, in parallel, or in hybrid connection, which is not specifically limited in the present disclosure.

Optionally, the electrical energy conversion apparatus 510 may be, but not limited to, at least one selected from a photovoltaic panel, a wind power generation apparatus, a hydropower generation apparatus, etc.

Optionally, the number of the energy storage apparatus 400 may be one or more. When a plurality of energy storage apparatus 400 are provided, the plurality of energy storage apparatus 400 are connected in series or in parallel with each other, which is not specifically limited in the present disclosure.

Reference to "embodiment" or "implementation" herein means that a particular feature, structure, or characteristic described in conjunction with the embodiment may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments. In addition, it should be understood that the features, structures, or characteristics described in the various embodiments of the present disclosure may be combined arbitrarily without conflicts to form additional embodiments that do not depart from the spirit and the scope of the technical solutions of the present disclosure.

It should be noted that the above embodiments are merely intended to illustrate rather than limit the technical solutions of the present disclosure. Although the present disclosure is described in detail with reference to the above preferred embodiments, those skilled in the art should understand that modifications or equivalent substitutions made to the technical solutions of the present disclosure shall not depart from the spirit and the scope of the technical solutions of the present disclosure.

## Claims

1. Positive electrode particles, comprising sodium iron phosphate pyrophosphate composite particles, wherein each of the sodium iron phosphate pyrophosphate composite particles comprises:
a sodium iron phosphate pyrophosphate particle; and
a carbon coating layer coated on a surface of the sodium iron phosphate pyrophosphate particle,
wherein the positive electrode particles comprise gray particles and golden particles, a quantity proportion Z of the gray particles among the positive electrode particles satisfying 0.8≤Z≤1.

2. The positive electrode particles according to claim 1, satisfying a relation of I_{P}/I_{G}≤0. 01, wherein:
I_{P} represents an intensity of a peak in a Raman pattern of the positive electrode particles in a range from 960 cm⁻¹ to 1030 cm⁻¹; and
I_{G} represents an intensity of a peak in the Raman pattern of the positive electrode particles in a range from 1570 cm⁻¹ to 1620 cm⁻¹.

3. The positive electrode particles according to claim 2, further satisfying a relation of I_{D}/I_{G}≤1.2, wherein:
I_{D} represents an intensity of a peak in the Raman pattern of the positive electrode particles in a range from 1330 cm⁻¹ to 1370 cm⁻¹; and
I_{G} represents the intensity of the peak in the Raman pattern of the positive electrode particles in the range from 1570 cm⁻¹ to 1620 cm⁻¹.

4. The positive electrode particles according to any one of claims 1 to 3, further comprising:
sodium iron phosphate particles; and
sodium iron pyrophosphate particles,
wherein in the positive electrode particles, a mass fraction of the sodium iron phosphate particles is less than or equal to 5%, and a mass fraction of the sodium iron pyrophosphate particles is less than or equal to 5%.

5. The positive electrode particles according to claim 1, wherein in the positive electrode particles, a mass fraction A of the carbon coating layer satisfies 1%≤A≤10%.

6. The positive electrode particles according to claim 1, wherein the positive electrode particles have a powder electrical resistivity R satisfying 10Ω·cm≤R≤9999Ω ·cm.

7. A method for preparing the positive electrode particles according to any one of claims 1 to 6, the method comprising:
mixing a sodium source, a phosphorus source, an iron source, and a carbon source in a solvent to obtain a slurry;
spray-drying the slurry to obtain precursor powder; and
performing stepwise sintering on the precursor powder, to obtain the positive electrode particles.

8. The method for preparing the positive electrode particle according to claim 7, wherein said performing stepwise sintering on the precursor powder comprises:
performing a first-stage sintering T1 at a first temperature satisfying 200°C≤T1 ≤300°C;
performing a second-stage sintering at a second temperature T2 satisfying 300°C≤T2≤400°C; and
performing a third-stage sintering at a third temperature T3 satisfying 450°C≤T3≤600°C.

9. A positive electrode plate, comprising:
a positive electrode current collector; and
a positive electrode active layer, comprising the positive electrode particles according to any one of claims 1 to 6.

10. The positive electrode plate according to claim 9, wherein the positive electrode plate has a film resistivity M satisfying 0.1Ω·m≤M≤5Ω·m.

11. A sodium battery, comprising:
an electrolyte;
the positive electrode plate according to claim 9 or 10;
a separator; and
a negative electrode plate.

12. An energy storage apparatus, comprising:
a casing; and
the sodium battery according to claim 11 received in the casing.
